# EUROPÄISCHE PATENTSCHRIFT

(11) **EP 4 041 501 B1**
(45) Veröffentlichungstag und Bekanntmachung des Hinweises auf die Patenterteilung: **02.08.2023**
(21) Anmeldenummer: 20793246.8
(22) Anmeldetag: 21.09.2020
(51) Int. Cl.: B25J 5/02, B21D 5/02, B21D 43/10, B25J 9/00, B21D 43/02

(54) **VERFAHREN ZUM TRANSPORT UND/ODER HANDLING VON BAUTEILEN**
METHOD FOR THE TRANSPORT AND/OR HANDLING OF COMPONENTS
PROCÉDÉ POUR TRANSPORTER ET/OU MANIPULER DES PIÈCES

(30) Priorität: 10.10.2019 AT 508682019
(43) Veröffentlichungstag der Anmeldung: 17.08.2022
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); SCHERNHAMMER, Michael, 4060 Leonding (AT); STEININGER, Verena, 4020 Linz (AT); THEIS, Helmut, 4540 Pfarrkirchen (AT)
(74) Vertreter: Burger, Hannes
(86) Internationale Anmeldenummer: PCT/AT2020/060340
(87) Internationale Veröffentlichungsnummer: WO 2021/068012

(56) Entgegenhaltungen:
- EP-A1- 1 916 072
- WO-A2-03/095125
- DE-A1-102009 058 905
- DE-A1-102014 014 404
- DE-T2- 69 823 773

## Beschreibung

Die Erfindung betrifft ein Verfahren zum Transport und/oder Handling von Bauteilen und eine Fertigungsanlage, wie dies in den Ansprüchen angegeben ist.

In modernen Fertigungsanlagen erfolgt der Werkstück- bzw. Bauteiltransport häufig vollautomatisiert. Hierzu hat sich die Verwendung von unterschiedlichen Manipulatoren mit Greifeinrichtungen, wie beispielsweise Vakuumgreifern etabliert.

Um hierbei den Durchsatz zu erhöhen und die Geschwindigkeit des Werkstückstransports bzw. Werkstückshandlings im Zuge eines Bearbeitungsvorgangs zu erhöhen sind dem Fachmann verschiedene Ansätze bekannt.

Aus dem Stand der Technik geht zur Reduktion von Taktzeiten beispielsweise hervor, dass im Zuge der Blechbearbeitung mehrere Greifvorrichtungen für die Bearbeitung von Werkstücken vorgesehen sein können.

In der DE 8817048 U1 wird eine Vorrichtung zum Handhaben, insbesondere zum Transportieren von Werkstücken zwischen zwei benachbarten Bearbeitungsstationen, beispielsweise in Form zweier Blechpressen, gezeigt. Zwischen den beiden Bearbeitungsstationen sind dabei zwei Handhabungsroboter übereinander angeordnet, wobei die Handhabungsroboter gegenläufig arbeiten und unter gegenseitiger Anpassung der Bewegungsabläufe getrennt steuerbar sind.

In der EP 3284547 A1 wird offenbart, dass Greifvorrichtungen im Zuge einer Blechbearbeitung arbeitsteilig agieren können. Hierbei kann beispielweise ein Werkstück von einer ersten Greifvorrichtung aufgenommen werden und dann mittels einer zweiten Greifvorrichtung gebogen werden.

Die US 2015217359 A1 zeigt eine Stapelvorrichtung für Bleche mit mehreren Greifrobotern, wobei mehrere Roboter beispielsweise simultan ein Blech greifen und transportieren können.

In der DE 102004035797 B3 wird gezeigt, dass ein Werkstück von einer ersten an eine zweite Handhabungsvorrichtung in einer Übergabeposition übergeben werden kann.

Die EP 0461275 B1 offenbart eine Vorrichtung zum Bearbeiten von Blechen mit einer Haupthandhabungseinheit und einer Hilfshandhabungseinheit, um beispielsweise ein Werkstück von einer Metallbearbeitungsmaschine aufzunehmen und ein anderes Werkstück an diese zu übergeben.

Die DE 698 23 773 T2 und die WO 03/095125 A2 offenbaren jeweils ein Verfahren und eine Fertigungsanlage zum Transport und/oder Handling von Blechteilen. In der WO 03/095125 A2 weist die Fertigungsanlage eine Umgreifstation auf.

Aufgabe der vorliegenden Erfindung war es, die Nachteile des Standes der Technik zu überwinden und eine Vorrichtung und ein Verfahren zur Verfügung zu stellen, mittels derer die Geschwindigkeit bzw. Produktivität einer Fertigung verbessert werden kann. Ferner ist es Aufgabe der Erfindung eine hauptzeitparallele Teilevorbereitung für Werkstücke für einen oder mehrere Bearbeitungsvorgänge zu ermöglichen.

Diese Aufgabe wird durch eine Vorrichtung und ein Verfahren gemäß den Ansprüchen gelöst. Die Erfindung betrifft ein Verfahren zum Transport und/oder Handling von Bauteilen, insbesondere Blechteilen, umfassend eine Manipulatoranordnung mit einem ersten Manipulator und zumindest einem zweiten Manipulator, wobei der erste Manipulator und der zumindest eine zweite Manipulator dazu ausgebildet sind ein Bauteil aufzugreifen, zu transportieren, zu halten und/oder abzulegen, zumindest eine Bearbeitungsvorrichtung, zur Durchführung von Bearbeitungsschritten an dem Bauteil, wobei nach einem ersten Bearbeitungszyklus zu einem vorbestimmten Umgreifzeitpunkt eine Übergabe des Bauteils von dem ersten Manipulator an den zumindest einen zweiten Manipulator erfolgt, wobei der Umgreifzeitpunkt zwischen dem ersten Bearbeitungszyklus und zumindest einem zweiten Bearbeitungszyklus liegt und wobei während dem Umgreifzeitpunkt das Bauteil an der Bearbeitungsvorrichtung zumindest abschnittsweise aufliegt und ausschließlich von der Bearbeitungsvorrichtung lastabtragend abgestützt wird.

Weiterhin ist vorgesehen, dass das Bauteil von dem ersten Manipulator an einer Umgreifstation abgelegt wird und dass das Bauteil von dem zumindest einen zweiten Manipulator von der Umgreifstation aufgegriffen wird.

Außerdem ist vorgesehen, dass die Umgreifstation als Handhabungsvorrichtung an der Bearbeitungsvorrichtung ausgebildet ist, wobei die Bearbeitungsvorrichtung einen Warteabschnitt und einen Umgreifabschnitt für die Handhabungsvorrichtung umfasst und wobei die Handhabungsvorrichtung vor dem Umgreifzeitpunkt aus dem Warteabschnitt in den Umgreifabschnitt und nach dem Umgreifzeitpunkt aus dem Umgreifabschnitt in den Warteabschnitt verbracht wird.

Bei einer Übergabe eines Bauteils zu einem vorbestimmten bzw. definierten Umgreifzeitpunkt zwischen zwei Bearbeitungszyklen kann die Zykluszeit verringert und somit die Produktivität der Bearbeitung von Bauteilen wesentlich gesteigert werden. Die Übergabe von Bauteilen kann hierbei zwischen zwei Manipulatoren erfolgen, wobei im Zuge der Übergabe das Bauteil ausschließlich von der Bearbeitungsvorrichtung, bzw. integralen Bestandteilen der Bearbeitungsvorrichtung lastabtragend abgestützt wird. Bei einer lastabtragenden Abstützung des Bauteils kann es sich um das Aufliegen auf einer Haltevorrichtung bzw. einem Auflageabschnitt der Bearbeitungsvorrichtung handeln.

Bei den Manipulatoren kann es sich um Handhabungseinrichtungen für Bauteile jeglicher Art handeln, wie zum Beispiel um mehrachsige Industrieroboter.

Anstelle von zwei Manipulatoren ist es dabei auch denkbar, dass eine Vielzahl von Manipulatoren im Bereich einer Fertigungsanlage mit zumindest einer Bearbeitungsvorrichtung angeordnet sind, wobei eine Übergabe bzw. Weitergabe von Bauteilen zwischen der Vielzahl an Manipulatoren erfolgt. Bei der zumindest einen Bearbeitungsvorrichtung kann es sich beispielhaft um eine Biegemaschine wie eine Abkantpresse oder eine Schwenkbiegemaschine handeln. Sind innerhalb einer Fertigungsanlage zur Bearbeitung von Bauteilen mehrere Bearbeitungsvorrichtungen vorgesehen, so können Bearbeitungsvorrichtungen unterschiedlicher Gattungen, wie eine Abkantpresse und eine Schwenkbiegemaschine vorgesehen sein. Die einzelnen Bearbeitungsvorrichtungen können hierbei arbeitsteilig eingesetzt werden.

Bei dem Umgreifzeitpunkt handelt es sich um eine Zeitspanne bzw. Zeitdauer, während welcher das Bauteil an der Bearbeitungsvorrichtung zumindest abschnittsweise aufliegt und ausschließlich von der Bearbeitungsvorrichtung lastabtragend abgestützt wird. Während dieser Zeitspanne wird der erste Manipulator, welcher das Bauteil abgelegt hat vom Bauteil weg verfahren und der zweite Manipulator, welcher das Bauteil aufnimmt, zum Bauteil hin verfahren.

Im Zuge der Übergabe des Bauteils kann diese von dem zweiten Manipulator an einer anderen Position des Bauteils aufgegriffen werden als von dem ersten Manipulator. Dadurch kann eine Lageveränderung des Bauteils erreicht werden, welche für einen darauffolgenden Bearbeitungszyklus notwendig bzw. gewünscht ist. Bei einer Lageveränderung kann es sich um ein Umdrehen bzw. Verdrehen des Bauteils handeln, um es in eine Position zu bringen, in welcher weitere Bearbeitungsschritte durchgeführt werden können. Vorteilhafterweise wird der Umgreifzeitpunkt zu einem definierten Zeitpunkt angesetzt, zu welchem eine Lageveränderung des Bauteils gewünscht ist. Hierbei sind auch mehrere Übergaben bzw. ein mehrfaches Umgreifen denkbar.

Bei den Bearbeitungsschritten eines Bearbeitungszyklus kann es sich dabei um Biegeschritte an einem Blechteil handeln. Dabei können im ersten Bearbeitungszyklus Biegeschritte durchgeführt werden, welche eine erste räumliche Lage des Bauteils erfordern und im zweiten Bearbeitungszyklus Biegeschritte durchgeführt werden, welche eine zweite räumliche Lage des Bauteils erfordern. Bei der Bearbeitung von Blechteilen auf einer Biegemaschine kann es sich bei dem ersten Manipulator um einen Belade- bzw. Beschickungsroboter handeln, welcher vorzugsweise auch einen Biegeprozess des Bauteils unterstützen kann. Bei dem wenigstens einen zweiten Manipulator kann es sich um einen Entnahmeroboter für das bearbeitete Bauteil in Bezug auf die Biegemaschine handeln, wobei der wenigstens eine zweite Manipulator auch einen Biegeprozess des Bauteils unterstützen kann.

Neben der Lageveränderung eines Bauteils zu einem definierten Umgreifzeitpunkt wird mit dem erfindungsgemäßen Verfahren auch eine hauptzeitparallele Bauteilvorbereitung ermöglicht, wobei gleichzeitig Bearbeitungsschritte an einem Bauteil durchgeführt werden können, während ein weiteres Bauteil zur Bearbeitungsvorrichtung transportiert wird. Weiterhin kann ein fertig bearbeitetes Bauteil von der Bearbeitungsvorrichtung weg transportiert werden während Bearbeitungsschritte an einem weiteren Bauteil im Gange sind. Somit kann weiterhin die Zykluszeit reduziert und die Produktivität der Bearbeitungsvorrichtung erhöht werden. Weiterhin kann mit dem erfindungsgemäßen Verfahren eine gleichmäßige Auslastung bzw. Arbeitsaufteilung zwischen mehreren Manipulatoren erreicht werden.

Um Wege zu sparen und die Produktivität weiterhin zu steigern, erfolgt erfindungsgemäß die Übergabe des Bauteils direkt an der Bearbeitungsvorrichtung. Als Übergabezeitpunkt wird vorteilhafterweise ein Umgreifzeitpunkt gewählt, zu welchem eine Lageveränderung, insbesondere eine Wendung in Bezug auf die Oberseite und Unterseite des Bauteils gewünscht ist.

Nachdem das erste Bauteil von dem ersten Manipulator aufgegriffen wurde, beginnt ein erster Bearbeitungszyklus mit mehreren Bearbeitungsschritten. Bei einem Blechteil werden hierbei mehrere Kantungen bzw. Biegeschritte durchgeführt. Nun wird zu dem Umgreifzeitpunkt das Bauteil abgelegt, wobei es an der Bearbeitungsvorrichtung zumindest abschnittsweise aufliegt und ausschließlich von der Bearbeitungsvorrichtung lastabtragend abgestützt wird. Im nächsten Schritt wird das Bauteil von dem zweiten Manipulator aufgegriffen und ein zweiter Bearbeitungszyklus mit einer Mehrzahl von Bearbeitungsschritten gestartet. Währenddessen wird eine zweites Bauteil von dem ersten Manipulator aufgegriffen. Während nun das erste Bauteil von dem zweiten Manipulator abgelegt wird, beginnt ein erster Bearbeitungszyklus an dem zweiten Bauteil. Vorteilhafterweise wird somit nicht nur die Aufnahme von Bauteilen sondern auch die Ablage von Bauteilen hauptzeitparallel durchgeführt, was weiterhin zu einer Reduktion der Produktionszeit und Steigerung der Produktivität führt.

Bei der Durchführung des erfindungsgemäßen Verfahrens wird auch der Zeitaufwand für den Umgreifprozess im Zuge der Übergabe von Bauteilen zwischen mehreren Robotern reduziert.

Weiterhin ist es von Vorteil, dass sowohl der erste als auch der zweite Manipulator ein Bauteil zu einer Bearbeitungsvorrichtung zuführen können, Bauteile während eines Bearbeitungsschritts unterstützen bzw. abstützen können und Bauteile im Zuge der Übergabe neu positionieren oder ausfädeln können.

Des Weiteren kann es zweckmäßig sein, wenn das Bauteil eine erste Greiffläche und eine zur ersten Greiffläche verschiedene zweite Greiffläche umfasst, wobei das Bauteil von dem ersten Manipulator an der ersten Greiffläche und von dem zumindest einen zweiten Manipulator an der zweiten Greiffläche aufgegriffen wird.

Die erste bzw. zweite Greiffläche kann wiederum mehrere Teilabschnitte umfassen, an welchem das Bauteil aufgegriffen und im Zuge eines Transports bis zum Ablegen gehalten wird.

Vorteilhafterweise befindet sich die erste Greiffläche in einem anderen Teilbereich des Bauteils als die zweite Greiffläche. Befindet sich beispielsweise im Falle eines Blechteils die erste Greiffläche an der Oberseite des Blechteils und die zweite Greiffläche an der Unterseite des Blechteils, so kann das Blechteil während dem ersten Bearbeitungszyklus mithilfe von Vakuumsaugern an der Oberseite des Blechteils gehalten werden. Zu dem Umgreifzeitpunkt kann nun das Blechteil abgelegt werden, wobei dieses an der Bearbeitungsvorrichtung zumindest abschnittsweise aufliegt und ausschließlich von der Bearbeitungsvorrichtung lastabtragend abgestützt wird.

In weiterer Folge kann das Blechteil von dem zweiten Manipulator an der Unterseite aufgegriffen werden, um weitere Bearbeitungsschritte durchzuführen bzw. den zweiten Bearbeitungszyklus zu beginnen.

Hierbei wird vorteilhafterweise eine Lageveränderung des Bauteils ermöglicht. Weiterhin können, nachdem das Bauteil nun an einer anderen Position von den Vakuumsaugern des zweiten Manipulators gehalten wird, Bearbeitungsschritte durchgeführt werden, welche einerseits die neue Lage des Bauteils und andererseits eine Neupositionierung von Halte- bzw. Greifeinrichtungen wie Vakuumsaugern erfordern.

In einer vorteilhaften Weiterbildung kann vorgesehen sein, dass das Bauteil an der ersten Greiffläche, welche an der Oberseite des Bauteils ausgebildet ist und an der zweiten Greiffläche, welche an der Unterseite des Bauteils ausgebildet ist, aufgegriffen wird.

Diese Weiterbildung ermöglicht auf vorteilhafte Art und Weise eine Vielzahl denkbarer Varianten für eine Bearbeitung des Bauteils.

Ferner kann vorgesehen sein, dass während dem zumindest einen zweiten Bearbeitungszyklus ein zweites Bauteil von dem ersten Manipulator aufgegriffen wird.

Das Bauteil kann dabei von einem Stapel aufgegriffen oder von einer Zuführeinheit übernommen werden. Vorteilhafterweise kann hiermit weiterhin eine hauptzeitparallele Teilevorbereitung durgeführt werden, was zu einer Reduktion von Taktzeiten und Produktionszeiten führen kann. Während das zweite Bauteil von dem ersten Manipulator aufgegriffen wird, können Bearbeitungsschritte an dem ersten Bauteil durchgeführt werden, wobei dieses von dem zweiten Manipulator gehalten wird. Weiterhin können die Manipulatoren auch, in dem Fall dass es sich bei dem Bauteil um ein Blechteil handelt, als Biegehilfe fungieren.

Darüber hinaus kann vorgesehen sein, dass während dem ersten Bearbeitungszyklus an dem zweiten Bauteil, das erste Bauteil von dem zumindest einen zweiten Manipulator abgelegt wird.

Die Ablage kann hierbei auf einem Stapel, einer Fördereinrichtung bzw. einer weiteren Manipulationseinheit erfolgen. Vorteilhafterweise kann mit einer hauptzeitparallelen Teileablage die Produktionszeit weiterhin reduziert werden.

Ist die Bearbeitungsvorrichtung als Biegemaschine ausgebildet, so kann es sich bei der Umgreifstation auch um eine Biegehilfe handeln. Vorteilhafterweise ist dabei die Umgreifstation verstellbar, wie verschwenkbar bzw. in die Längsrichtung der Bearbeitungsvorrichtung verfahrbar ausgebildet. Zu einen Umgreifzeitpunkt kann dabei die Umgreifstation in einen Auflageabschnitt bzw. Umgreifabschnitt verbracht bzw. verschwenkt werden. Nach der Übergabe an den zweiten Manipulator kann damit der gesamte Bearbeitungsabschnitt, bzw. Bearbeitungsbereich der Bearbeitungsvorrichtung freigegeben werden, was zu einer erhöhten Flexibilität der Bearbeitungsvorrichtung führt. Während der Durchführung von Bearbeitungsschritten an dem Bauteil kann somit der Auflageabschnitt bzw. Umgreifabschnitt freigegeben werden.

Die Umgreifstation kann somit derart flexibel ausgebildet sein, dass diese nur zu dem Umgreifzeitpunkt zur Verfügung steht.

Weiterhin ist eine Manipulation des Bauteils mittels der Umgreifstation denkbar, wie beispielsweise ein Verdrehen um einen bestimmten Winkelbereich, indem die Umgreifstation drehbar ausgebildet ist. Bei einer drehbaren Umgreifstation kann es sich dabei um eine Art Drehteller handeln.

Bei der Handhabungsvorrichtung kann es sich dabei um eine Biegehilfe oder einen zusätzlichen Manipulator handeln, welcher zu dem Umgreifzeitpunkt in den Umgreifabschnitt bzw. Auflageabschnitt verfahrbar ausgebildet ist. Um den gesamten Bearbeitungsabschnitt für die Durchführung von Bearbeitungsschritten freizugeben ist die Handhabungsvorrichtung vorteilhafterweise in einen Warteabschnitt verfahrbar, wobei dieser seitlich an der Bearbeitungsvorrichtung vorgesehen sein kann. Alternativ dazu kann es sich bei dem Warteabschnitt auch um einen eigenen Stauraum für die Handhabungsvorrichtung handeln.

Bei dem Umgreifabschnitt bzw. Auflageabschnitt, auf welchem das Bauteil während dem Umgreifzeitpunkt zumindest abschnittsweise aufliegt und ausschließlich von der Bearbeitungsvorrichtung bzw. integralen Bestandteilen der Bearbeitungsvorrichtung, wie der Handhabungsvorrichtung lastabtragend abgestützt wird, kann es sich um eine definierte Stelle bzw. Position handeln, welche für das Umgreifen besonders günstig ist. Beispielsweise kann der Umgreifabschnitt entlang des Bearbeitungsabschnittes bzw. der Bearbeitungsabschnitte der Bearbeitungsvorrichtung derart vorgesehen sein, dass es sich bei dem Umgreifabschnitt um eine Position für die Durchführung des zweiten Bearbeitungszyklus handelt.

Der Umgreifabschnitt kann hierbei auch variabel ausgebildet sein, indem die Handhabungsvorrichtung auf Schienen verfahrbar oder ein- und ausklappbarausgebildet ist.

Ferner kann es zweckmäßig sein, wenn das Bauteil auf zumindest einem Werkzeug der Bearbeitungsvorrichtung zumindest abschnittsweise aufliegt und lastabtragend abgestützt wird, während das Bauteil von dem zumindest einen zweiten Manipulator aufgegriffen wird.

Alternativ zu einer Umgreifstation bzw. einer Handhabungsvorrichtung zur Ablage des Bauteils während einem Umgreifzeitpunkt, können auch eines oder mehrere Werkzeuge der Bearbeitungsvorrichtung zur Ablage von Bauteilen dienen. Vorteilhafterweise brauchen hierbei keine zusätzlichen baulichen Vorrichtungen vorgesehen werden. Handelt es sich bei dem Bauteil um ein Blechteil und bei der Bearbeitungsvorrichtung um eine Biegemaschine, so können die Bauteile während dem Umgreifzeitpunkt auf den Unterwerkzeugen der Biegemaschine aufliegen bzw. lastabtragend abgestützt werden. Die Unterwerkzeuge fungieren hierbei als Auflageabschnitt bzw. Umgreifstation. Denkbar ist hierbei auch eine Klemmung mithilfe der Unter- und Oberwerkzeuge der Biegemaschine, zur sicheren Halterung des Bauteils im Zuge der Übergabe.

Entsprechend einer praktikablen Maßnahme kann auch vorgesehen sein, dass das Bauteil durch ein Blechteil gebildet ist, die zumindest eine Bearbeitungsvorrichtung durch eine Biegemaschine gebildet ist, und das zumindest eine Werkzeug durch Oberwerkzeuge und Unterwerkzeuge der Biegemaschine gebildet ist, wobei das Blechteil während dem Aufgreifen durch den zumindest einen zweiten Manipulator zwischen den Oberwerkzeugen und Unterwerkzeugen geklemmt wird und das Blechteil während dem Aufgreifen durch den zumindest einen zweiten Manipulator vom ersten Manipulator nicht kontaktiert oder nicht beaufschlagt wird.

Insbesondere ist es hierbei von Vorteil, wenn die Oberwerkzeuge und Unterwerkzeuge der Biegemaschine als miteinander korrespondierende obere und untere Biegewerkzeuge ausgebildet sind.

Diese vorteilhafte Maßnahme einer temporären Klemmung eines Blechteiles im Zuge der Übergabe auf den zweiten Manipulator bringt insbesondere Vorteile in Bezug auf Stabilität und Sicherheit bei der Übergabe.

Zudem wird erreicht, dass der erste Manipulator für weitere Bearbeitungsschritte an nachfolgenden Bauteilen zur Verfügung steht. Hierdurch wird die Anlageneffizienz weiter gesteigert und das Zusammenspiel der Manipulatoren auf vorteilhafte Art und Weise zusätzlich optimiert.

Gemäß einer Weiterbildung ist es möglich, dass der vorbestimmte Umgreifzeitpunkt zwischen dem ersten Manipulator und dem zumindest einen zweiten Manipulator zwischen einem ersten Biegevorgang zur Herstellung einer ersten Umformung im Bauteil und einem zweiten Biegevorgang zur Herstellung einer zweiten Umformung im Bauteil liegt, welche zweite Umformung gegengleich zur ersten Umformung verläuft, insbesondere bevor ein im Wesentlichen Z-förmiger Querschnittsverlauf im Bauteil geformt wird.

Insbesondere kann es sich bei der ersten und zweiten Umformung um eine Abwinkelung des Bauteils handeln. Diese Weiterbildung ist besonders deshalb als vorteilhaft zu erachten, weil durch das Umgreifen zwischen den beiden Umform- bzw. Abwinkelungsschritten auf effiziente Art und Weise gegengleiche Bearbeitungsschritte durchgeführt werden können.

Darüber hinaus kann vorgesehen sein, dass der erste Manipulator und der zumindest eine zweite Manipulator entlang einer gemeinsamen Verfahrstrecke in Längsrichtung verfahren werden.

Hierbei erfolgt vorteilhafterweise eine gemeinsame Nutzung einer einzelnen Verfahrstrecke. Bei der Verfahrstrecke kann es sich beispielsweise um eine Schienenanordnung handeln, entlang welcher die Manipulatoren in Längsrichtung zur Bearbeitungsvorrichtung geführt und verfahren werden können.

Vorteilhaft bei der gemeinsamen Nutzung einer Verfahrstrecke ist dabei auch, dass eine Bodenfahrbahn gemeinsam genützt werden kann und die Manipulatoren weitgehend identisch ausgeführt werden können. Somit kann eine Vielzahl von Gleichteilen in den Manipulatoren verbaut sein, was eine einfachere Wartung und Reparatur ermöglicht. Die Manipulatoren können sich dabei in jeglichem Bereich der Verfahrstrecke begegnen, wo es zu einer Übergabe eines Bauteils kommen kann.

Des Weiteren kann vorgesehen sein, dass der erste Manipulator entlang einer ersten Verfahrstrecke in Längsrichtung verfahren wird und dass der zumindest eine zweite Manipulator entlang einer zweiten Verfahrstrecke, welche zweite Verfahrstrecke parallel zur ersten Verfahrstrecke verläuft, in Längsrichtung verfahren wird.

Vorteilhafterweise können bei der Ausbildung zweier parallel zueinander angeordneter Verfahrstrecken für die Manipulatoren, der erste Manipulator und der zweite Manipulator aneinander vorbeifahren. Hiermit kann die Flexibilität der Fertigungsanlage weiterhin gesteigert werden, wodurch eine weitere Reduktion der Produktionszeit erreicht werden kann.

Weiterhin kann die zweite Verfahrstrecke auch hängend, über der ersten Verfahrstrecke ausgebildet sein. Hierbei kann der zweite Manipulator hängend, über dem ersten Manipulator montiert sein. Hierbei können die beiden Manipulatoren wiederum weitgehend identisch ausgeführt sein.

Gemäß einer besonderen Ausprägung ist es möglich, dass der zumindest eine zweite Bearbeitungszyklus an einer zweiten Bearbeitungsvorrichtung durchgeführt wird.

Vorteilhafterweise kann dabei die zweite Bearbeitungsvorrichtung mit zur ersten Bearbeitungsvorrichtung abweichenden Werkzeugen, wie Biegewerkzeugen gerüstet sein. Nach dem Durchführen von einem ersten Bearbeitungszyklus an dem Bauteil an der ersten Bearbeitungsvorrichtung kann somit ohne zusätzliches Umrüsten von Werkzeugen gleich mit einem zweiten Bearbeitungszyklus an der zweiten Bearbeitungsvorrichtung begonnen werden.

Hierbei sind auch Bearbeitungsvorrichtungen unterschiedlicher Gattungen denkbar. Beispielsweise kann es sich bei der ersten Bearbeitungsvorrichtung um eine Abkantpresse und bei der zweiten Bearbeitungsvorrichtung um eine Schwenkbiegemaschine handeln. Hiermit können die Produktions- bzw. Fertigungszeit weiterhin reduziert werden und die Flexibilität der Fertigungsanlage gesteigert werden.

Die Erfindung betrifft ferner eine Fertigungsanlage umfassend eine Manipulatoranordnung mit einem ersten Manipulator und zumindest einem zweiten Manipulator, zumindest eine Bearbeitungsvorrichtung, zur Durchführung von Bearbeitungs-schritten an einem Bauteil, wobei an der Bearbeitungsvorrichtung ein Auflageabschnitt vorgesehen ist, in welchem das Bauteil während einem Umgreifzeitpunkt lastabtragend abstützbar ist.

Weiterhin ist vorgesehen, dass in dem Auflageabschnitt eine Umgreifstation ausgebildet ist, von welcher das Bauteil während einem Umgreifzeitpunkt lastabtragend abstützbar ist.

Ferner ist vorgesehen, dass die Umgreifstation als Handhabungsvorrichtung an der Bearbeitungsvorrichtung ausgebildet ist, wobei die Bearbeitungsvorrichtung einen Warteabschnitt und einen Umgreifabschnitt für die Handhabungsvorrichtung umfasst und wobei die Handhabungsvorrichtung aus dem Warteabschnitt in den Umgreifabschnitt und vice versa verfahrbar ist.

Mittels der erfindungsgemäßen Fertigungsanlage erfolgt die Übergabe des Bauteils direkt an der Bearbeitungsvorrichtung, wobei es sich bei dem Auflageabschnitt um einen integralen Bestandteil bzw. eine Baugruppe der Bearbeitungsvorrichtung handeln kann. Im Zuge der Übergabe wird das Bauteil von dem ersten Manipulator abgelegt und von dem zweiten Manipulator aufgenommen. Während weder der erste Manipulator noch der zweite Manipulator an dem Bauteil angreifen, wird das Bauteil von der Bearbeitungsvorrichtung lastabtragend abgestützt.

Zum Aufgreifen, Transportieren und Halten von Bauteilen können an den Manipulatoren Greifeinrichtungen wie Vakuumsauger oder Zangengreifer vorgesehen sein.

Vorteilhafterweise wird das Bauteil von dem Manipulatoren an unterschiedlichen Stellen bzw. Greifflächen gegriffen, wodurch im Zuge der Übergabe eine Lageveränderung des Bauteils bzw. ein Umgreifen ermöglicht wird. Somit kann eine für einen zweiten Bearbeitungszyklus gewünschte Lage des Bauteils einfach erreicht werden.

Wird nun mithilfe des zweiten Manipulators der zweite Bearbeitungszyklus durchgeführt, so kann der erste Manipulator aus einer Beladezone bzw. von einem Stapel bereits ein weiteres Bauteil aufgreifen und zur Bearbeitungsvorrichtung transportieren. Während das erste Bauteil von dem zweiten Manipulator in einer Entladezone bzw. auf einem Stapel abgelegt wird, kann bereits ein Bearbeitungszyklus an dem neu zugeführten Bauteil beginnen bzw. durgeführt werden.

Durch den hauptzeitparallelen Zu- und Abtransport von Bauteilen zu einer Bearbeitungsvorrichtung wird erfindungsgemäß die Zykluszeit verringert und somit die Produktivität der Fertigungsanlage gesteigert.

Vorteilhafterweise ist die Umgreifstation verstellbar, wie verschwenkbar bzw. in die Längsrichtung der Bearbeitungsvorrichtung verfahrbar ausgebildet. Zu einen Umgreifzeitpunkt kann dabei die Umgreifstation in einen Auflageabschnitt bzw. Umgreifabschnitt verbracht bzw. verschwenkt werden. Nach erfolgter Übergabe an den zweiten Manipulator kann damit der gesamte Bearbeitungsabschnitt, bzw. Bearbeitungsbereich der Bearbeitungsvorrichtung freigegeben werden, was zu einer erhöhten Flexibilität der Bearbeitungsvorrichtung führt. Während der Durchführung von Bearbeitungsschritten an dem Bauteil kann somit der Auflageabschnitt bzw. Umgreifabschnitt freigegeben werden.

Die Umgreifstation kann somit derart flexibel ausgebildet sein, dass diese nur zu dem Umgreifzeitpunkt zur Verfügung steht.

Bei der Handhabungsvorrichtung kann es sich dabei um eine Biegehilfe oder einen zusätzlichen Manipulator handeln, welcher zu dem Umgreifzeitpunkt in den Umgreifabschnitt bzw. Auflageabschnitt verfahrbar ausgebildet ist. Um den gesamten Bearbeitungsabschnitt für die Durchführung von Bearbeitungsschritten freizugeben ist die Handhabungsvorrichtung vorteilhafterweise in einen Warteabschnitt verfahrbar, wobei dieser seitlich an der Bearbeitungsvorrichtung vorgesehen sein kann. Alternativ dazu kann es sich bei dem Warteabschnitt auch um einen eigenen Stauraum für die Handhabungsvorrichtung handeln.

Darüber hinaus kann vorgesehen sein, dass eine gemeinsame Verfahrstrecke für den ersten Manipulator und für den zumindest einen zweiten Manipulator vorgesehen ist.

Hierbei erfolgt vorteilhafterweise eine gemeinsame Nutzung einer einzelnen Verfahrstecke, wobei sich die darauf verfahrbaren Manipulatoren in jeglichem Bereich der Verfahrstrecke begegnen können, wo es zu einer Übergabe eines Bauteils kommen kann.

Vorteilhaft ist auch eine Ausprägung, gemäß welcher vorgesehen sein kann, dass eine erste Verfahrstrecke für den ersten Manipulator und eine zweite Verfahrstrecke für den zumindest einen zweiten Manipulator vorgesehen ist.

Vorteilhafterweise können bei der Ausbildung zweier parallel zueinander angeordneter Verfahrstrecken für die Manipulatoren, der erste Manipulator und der zweite Manipulator aneinander vorbeifahren, bzw. an jegliche Stelle der jeweiligen Verfahrstrecke verfahren werden. Hiermit kann die Flexibilität der Fertigungsanlage weiterhin gesteigert werden, wodurch eine weitere Reduktion der Produktionszeit erreicht werden kann.

Gemäß einer Weiterbildung ist es möglich, dass eine zweite Bearbeitungsvorrichtung vorgesehen ist, an welcher zumindest ein zweiter Bearbeitungszyklus durchführbar ist.

Nach dem Durchführen von einem ersten Bearbeitungszyklus an dem Bauteil an der ersten Bearbeitungsvorrichtung kann somit ohne zusätzliches Umrüsten von Werkzeugen gleich mit einem zweiten Bearbeitungszyklus an der zweiten Bearbeitungsvorrichtung begonnen werden. Bei der zweiten Bearbeitungsvorrichtung kann es sich auch um eine Bearbeitungsvorrichtung abweichender Gattung handeln, an welcher andere Bearbeitungsschritte als auf der ersten Bearbeitungsvorrichtung durchgeführt werden können. Hiermit können die Produktions- bzw. Fertigungszeit weiterhin reduziert werden und die Flexibilität der Fertigungsanlage gesteigert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage mit einer Manipulatoranordnung und einer Bearbeitungsvorrichtung, wobei ein erster Bearbeitungszyklus an einem ersten Bauteil durchgeführt wird; eine solche Fertigungsanlage fällt nicht unter den Wortlaut der Ansprüche, wird aber als das Verständnis der Erfindung erleichternd angesehen;
- Fig. 2: die Fertigungsanlage der Figur 1 mit der Manipulatoranordnung und der Bearbeitungsvorrichtung, wobei das erste Bauteil von einem ersten Manipulator an einer Umgreifstation abgelegt wird;
- Fig. 3: die Fertigungsanlage der Figur 1 mit der Manipulatoranordnung und der Bearbeitungsvorrichtung, wobei das erste Bauteil von einem zweiten Manipulator an der Umgreifstation aufgegriffen wird;
- Fig. 4: die Fertigungsanlage der Figur 1 mit der Manipulatoranordnung und der Bearbeitungsvorrichtung, wobei ein zweites Bauteil von dem ersten Manipulator aufgegriffen wird und ein zweiter Bearbeitungszyklus an dem ersten Bauteil durchgeführt wird;
- Fig. 5: die Fertigungsanlage der Figur 1 mit der Manipulatoranordnung und der Bearbeitungsvorrichtung, wobei ein erster Bearbeitungszyklus an dem zweiten Bauteil durchgeführt wird und das erste Bauteil abgelegt wird;
- Fig. 6: eine Ausführungsform einer Fertigungsanlage gemäß der Erfindung mit einer Manipulatoranordnung und einer Bearbeitungsvorrichtung, wobei ein erster Manipulator entlang einer ersten Verfahrstrecke und ein zweiter Manipulator entlang einer zweiten Verfahrstrecke verfahren wird;
- Fig. 7: ein Bauteil mit einer ersten Greiffläche und einer zweiten Greiffläche in einer Seitenansicht;
- Fig. 8: das Bauteil mit mehreren Teilabschnitten der ersten Greiffläche in einer Draufsicht;
- Fig. 9: ein Ablaufdiagramm mit mehreren Bearbeitungszyklen an mehreren Bauteilen.

Einführend sei festgehalten, dass in den unterschiedlich beschriebenen Fertigungsanlagen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

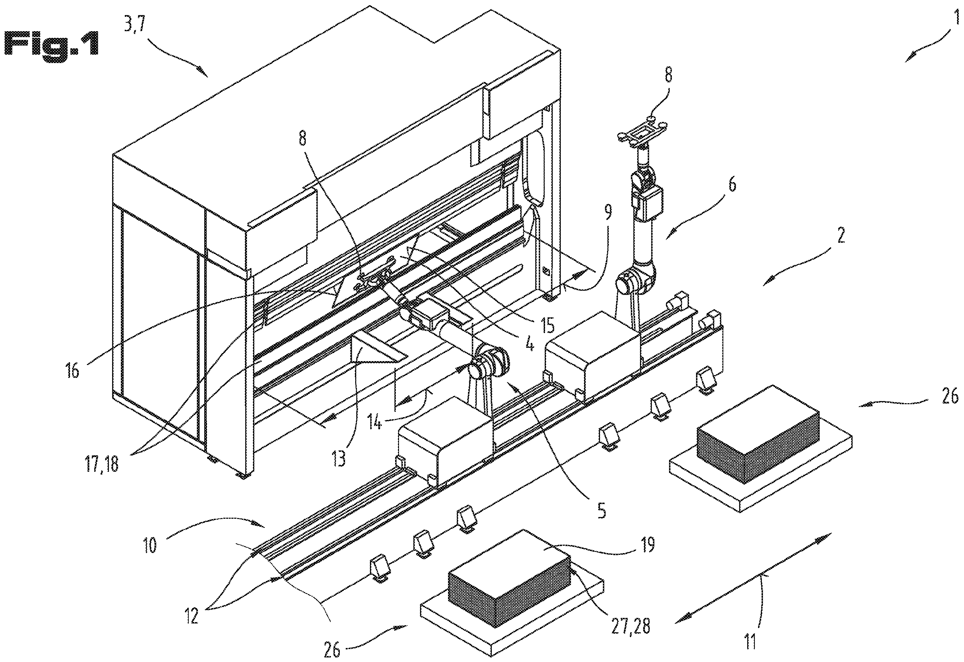

In der Fig. 1 ist eine Fertigungsanlage 1 mit einer Manipulatoranordnung 2 und einer Bearbeitungsvorrichtung 3 dargestellt, wobei ein erster Bearbeitungszyklus an einem ersten Bauteil 4 durchgeführt wird.

Die Manipulatoranordnung 2 umfasst einen ersten Manipulator 5 und einen zweiten Manipulator 6 bzw. zumindest einen zweiten Manipulator 6, wobei der erste Manipulator 5 und der zumindest eine zweite Manipulator 6 dazu ausgebildet sind das Bauteil 4 aufzugreifen, zu transportieren, zu halten und/oder abzulegen. Als Bearbeitungsvorrichtung 3 zur Durchführung von Bearbeitungsschritten an dem Bauteil 4 ist in der Fig. 1 beispielhaft eine Abkantpresse 7 dargestellt. Zum Aufgreifen, Transportieren, Halten bzw. Ablegen des Bauteils 4, sind an dem ersten Manipulator 5 und an dem zweiten Manipulator 6 jeweils mehrere Vakuumsauger 8 vorgesehen.

Gemäß der Darstellung in Fig. 1 ist ein Bearbeitungsschritt eines ersten Bearbeitungszyklus an dem ersten Bauteil 4 in Gange. Der erste Bearbeitungszyklus kann dabei einen oder mehrere Bearbeitungsschritte umfassen, wobei es sich in diesem Beispiel um eine definierte Abfolge von Biegeschritten handelt. Während dem ersten Bearbeitungszyklus wird das erste Bauteil 4 von mehreren Vakuumsaugern 8 des ersten Manipulators 5 gehalten, bzw. wird das erste Bauteil 4 von dem ersten Manipulator 5 an unterschiedliche Bearbeitungsabschnitte 9 der Abkantpresse 7 verbracht um eine Abfolge von Biegeschritten an dem ersten Bauteil 4 durchzuführen.

Zum Verfahren des ersten Manipulators 5 und des zweiten Manipulators 6 ist eine erste Verfahrstrecke 10 vorgesehen, entlang welcher der erste Manipulator 5 und der zweite Manipulator 6 in Längsrichtung 11 zur Bearbeitungsvorrichtung 3 bzw. Abkantpresse 7 verfahren werden können, um das Bauteil 4 zu den unterschiedlichen Bearbeitungsabschnitten 9 der Bearbeitungsvorrichtung 3 bzw. Abkantpresse 7 verbringen zu können. An den unterschiedlichen Bearbeitungsabschnitten 9 der Bearbeitungsvorrichtung 3 bzw. Abkantpresse 7, welche durch unterschiedlich ausgeformte bzw. durch unterschiedlich lange Biegewerkezuge definiert sein können, werden die einzelnen Bearbeitungsschritte bzw. Biegeschritte der Bearbeitungszyklen durchgeführt.

Der erste Manipulator 5 und der zweite Manipulator 6 nutzen dabei die gleiche bzw. eine gemeinsame Verfahrstrecke 10 mit einer Schienenanordnung 12. In einer nicht näher dargestellten Variante ist es auch denkbar, dass der erste Manipulator 5 und der zweite Manipulator 6 anstelle entlang einer Schienenanordnung 12, entlang eines definierten Bereiches in Längsrichtung 11 verfahren werden, bzw. bewegt werden können.

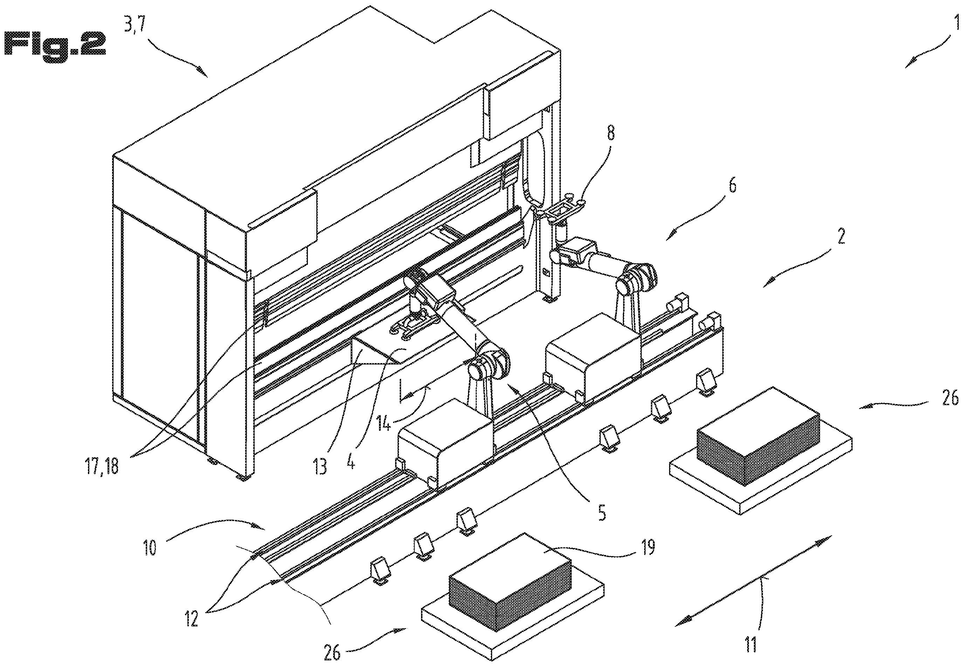

In der Fig. 2 ist die Fertigungsanlage 1 mit der Manipulatoranordnung 2 und der Bearbeitungsvorrichtung 3 dargestellt, wobei das erste Bauteil 4 von dem ersten Manipulator 5 an einer Umgreifstation 13 abgelegt wird, an welcher das Bauteil 4 während einem Umgreifzeitpunkt lastabtragend abgestützt wird. Die Umgreifstation 13 ist dabei in einem Beschickungsabschnitt der Bearbeitungsvorrichtung 3 bzw. in einem Auflageabschnitt 14 der Fertigungsanlage 1 ausgebildet. Eine solche Ausbildung der Umgreifstation fällt nicht unter den Wortlaut der Ansprüche.

Nach einem ersten Bearbeitungszyklus, mit zumindest einem Bearbeitungsschritt, erfolgt somit zu einem vorbestimmten Umgreifzeitpunkt eine Übergabe des ersten Bauteils 4 von dem ersten Manipulator 5 an den zumindest einen zweiten Manipulator 6. Der Umgreifzeitpunkt liegt dabei zwischen dem ersten Bearbeitungszyklus und zumindest einem zweiten Bearbeitungszyklus, mit wiederum zumindest einem Bearbeitungsschritt bzw. Biegeschritt.

Im Zuge des Umgreifens kann dabei die Lage des Bauteils 4 verändert werden. Beispielsweise kann das Bauteil 4 umgedreht bzw. derart verdreht werden, dass es eine für einen zweiten Bearbeitungszyklus erforderliche räumliche Lage einnimmt.

Während dem Umgreifzeitpunkt liegt das Bauteil 4 an der Bearbeitungsvorrichtung 3 zumindest abschnittsweise im Bereich des Auflageabschnitts 14 auf und wird ausschließlich von der Bearbeitungsvorrichtung 3 bzw. integralen Bestandteilen der Bearbeitungsvorrichtung 3 lastabtragend abgestützt.

Das erste Bauteil 4 umfasst dabei eine erste Greiffläche 15 und eine zweite Greiffläche 16, wobei das Bauteil 4 von dem ersten Manipulator 5 an der ersten Greiffläche 15 aufgegriffen bzw. an der Umgreifstation 13 abgelegt wird.

In einer alternativen, nicht näher dargestellten Variante kann es sich bei dem Auflageabschnitt 14, in welchem das Bauteil 4 während einem Umgreifzeitpunkt lastabtragend abstützbar ist, auch um einen Bereich im Bearbeitungsabschnitt 9 handeln, in welchem das Bauteil 4 mithilfe eines Werkzeugs 17 der Bearbeitungsvorrichtung 3 lastabtragend abgestützt wird. Hierzu ist weiterhin denkbar, dass mithilfe der Biegewerkzeuge 18 ein Abkantpresse 7 das Bauteil abgestützt bzw. gehalten wird, wobei auch eine zusätzliche Klemmung mittels der Biegewerkzeuge 18 denkbar ist. Eine solche Variante fällt nicht unter den Wortlaut der Ansprüche.

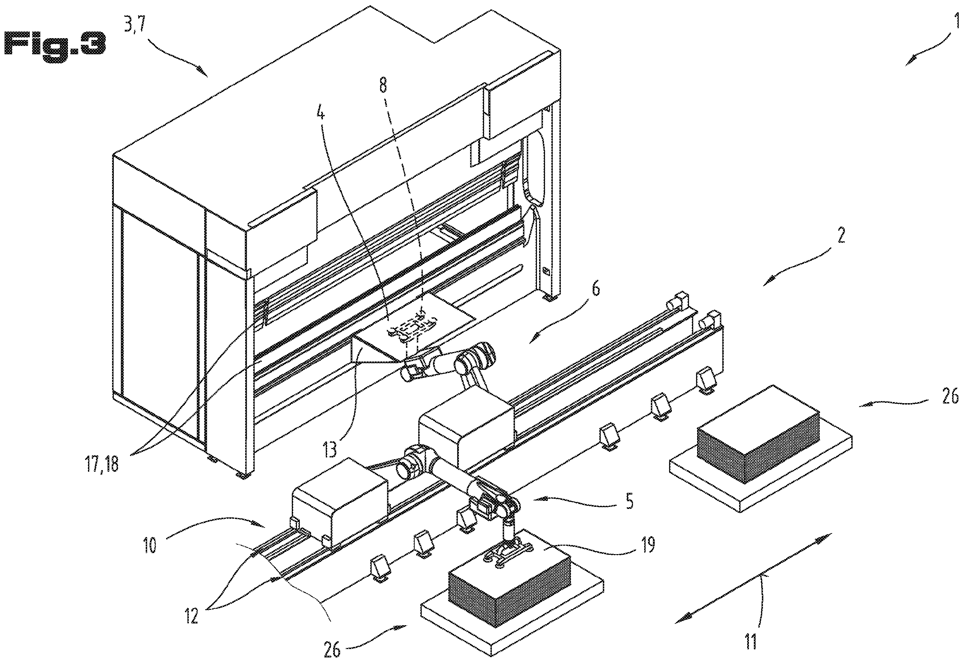

In der Fig. 3 ist die Fertigungsanlage 1 mit der Manipulatoranordnung 2 und der Bearbeitungsvorrichtung 3 dargestellt, wobei das erste Bauteil 4 von dem zweiten Manipulator 6 an der Umgreifstation 13 bzw. im Auflageabschnitt 14 aufgegriffen wird. Das erste Bauteil 4 wird dabei von dem zweiten Manipulator 6 an der zweiten Greiffläche 16 aufgegriffen.

Alternativ dazu ist es gemäß einer nicht näher dargestellten Variante auch denkbar, dass das erste Bauteil 4 auf zumindest einem Werkzeug 17 der Bearbeitungsvorrichtung 3 zumindest abschnittsweise aufliegt und lastabtragend abgestützt wird, während das das erste Bauteil 4 von dem zumindest einen zweiten Manipulator 6 aufgegriffen wird.

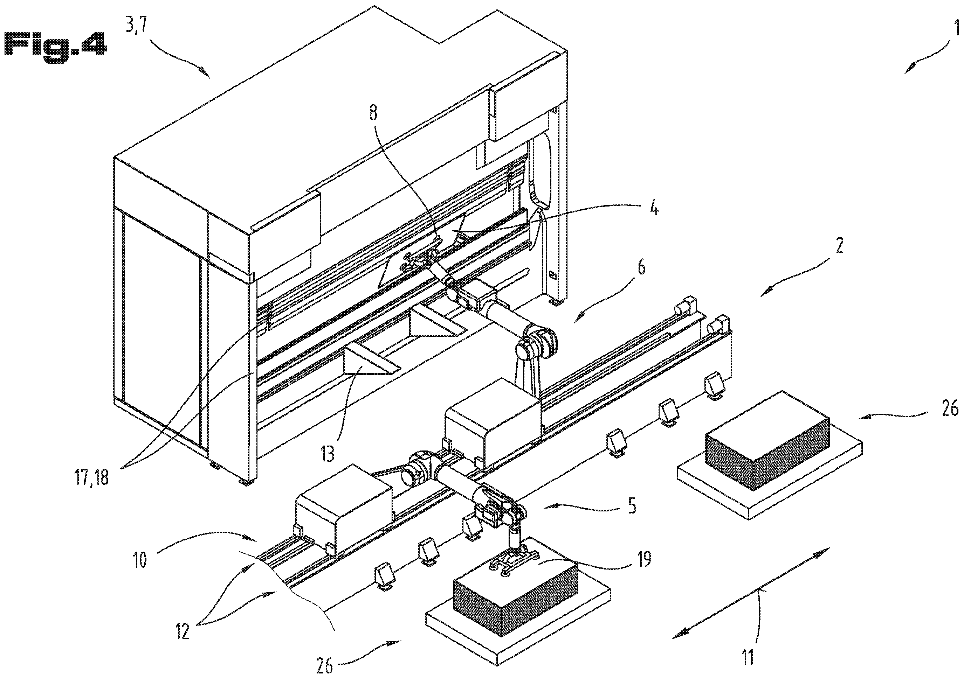

In der Fig. 4 ist die Fertigungsanlage 1 mit der Manipulatoranordnung 2 und der Bearbeitungsvorrichtung 3 dargestellt, wobei ein zweites Bauteil 19 von dem ersten Manipulator 5 aufgegriffen wird, während ein zweiter Bearbeitungszyklus an dem ersten Bauteil 4 durchgeführt wird. Das zweite Bauteil 19 kann dabei beispielsweise von einem Stapel 26 aufgenommen werden, auf welchem zu bearbeitende Bauteile 4, 19 lagern.

Das erste Bauteil 4 wird während des zweiten Bearbeitungszyklus vom ersten Manipulator 5 mittels den Vakuumsaugern 8 gehalten, bzw. vom ersten Manipulator 5 entlang der Verfahrstrecke 10 in Längsrichtung 11 zu den unterschiedlichen Bearbeitungsabschnitten 9 der Bearbeitungsvorrichtung 3 bzw. Abkantpresse 7 verbracht.

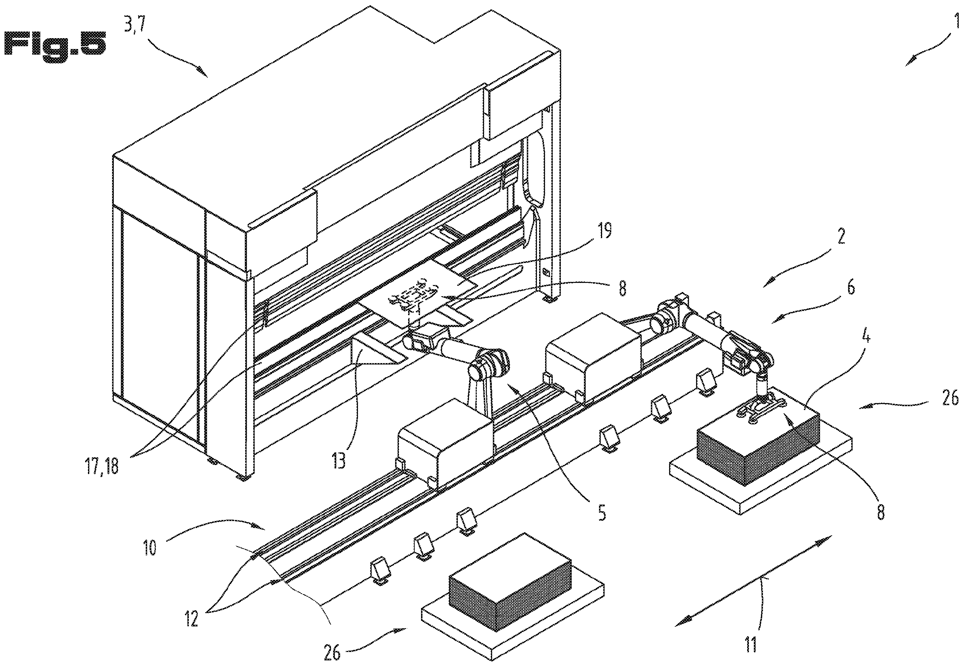

In der Fig. 5 ist die Fertigungsanlage 1 mit der Manipulatoranordnung 2 und der Bearbeitungsvorrichtung 3 dargestellt, wobei ein erster Bearbeitungszyklus an dem zweiten Bauteil 19 durchgeführt wird, während das erste erstes Bauteil 4 von dem zweiten Manipulator 6 abgelegt wird. Das erste Bauteil 4 kann dabei wiederum auf einem Stapel 26 oder ein Palette abgelegt werden, bzw. ist es auch denkbar dass das erste Bauteil 4 an eine weitere nicht näher dargestellte Fertigungsanlage 1 transportiert wird.

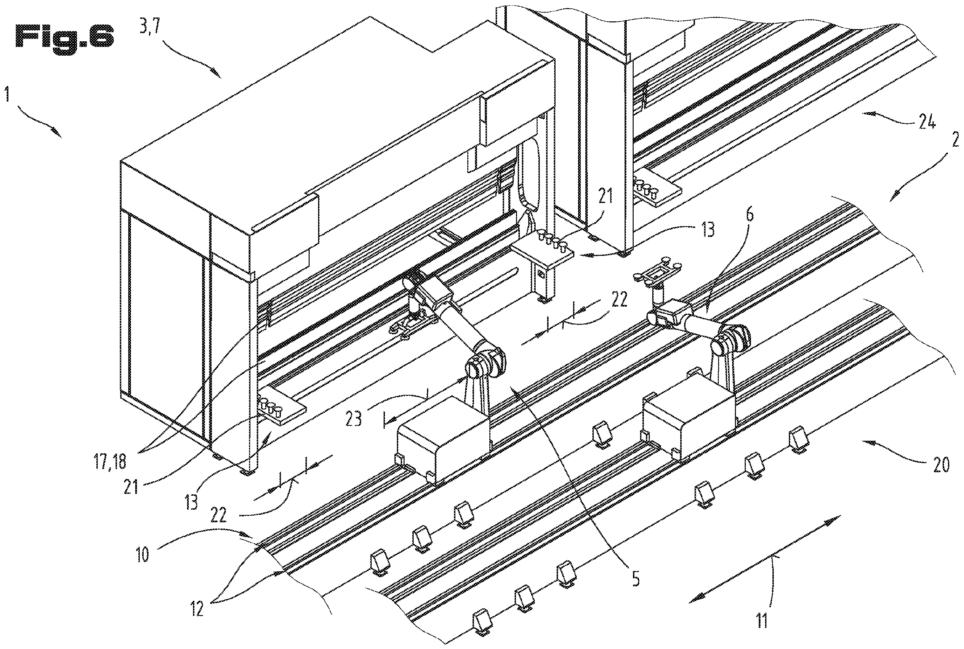

In der Fig. 6 ist eine Ausführungsform einer Fertigungsanlage 1 gemäß der Erfindung gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Fig. 6 zeigt eine Ausführungsform einer Fertigungsanlage 1 mit einer Manipulatoranordnung 2 und einer Bearbeitungsvorrichtung 3, wobei ein erster Manipulator 5 entlang einer ersten Verfahrstrecke 10 und ein zweiter Manipulator 6 entlang einer zweiten Verfahrstrecke 20 verfahren wird.

Bei der ersten Verfahrstrecke 10 und der zweiten Verfahrstrecke 20 kann es sich wiederum jeweils um Schienenanordnungen 12 handeln, entlang welcher der erste Manipulator 5 und der zweite Manipulator 6 in Längsrichtung 11 verfahren werden können, bzw. bewegt werden können.

In einer nicht näher dargestellten Ausführungsform kann hierbei die zweite Verfahrstrecke 20 oberhalb der ersten Verfahrstrecke 10 angeordnet sein, wobei der zweite Manipulator 6 hängend an der zweiten Verfahrstrecke 20 angeordnet ist.

Gemäß Darstellung in der Fig. 6 wird ein erster Bearbeitungszyklus mit mehreren Bearbeitungsschritten an einem ersten Bauteil 4 durchgeführt. Der zweite Manipulator 6 befindet sich in einer Warteposition. Nachdem das erste Bauteil 4 an einer Umgreifstation 13 abgelegt wurde, kann der zweite Manipulator 6 an der zweiten Verfahrstrecke 20 derart verfahren werden, dass der zweite Manipulator 6 das erste Bauteil 4 von der Umgreifstation 13 zur Durchführung eines zweiten Bearbeitungszyklus wieder aufnehmen kann.

Die Umgreifstation 13 ist als Handhabungsvorrichtung 21 an der Bearbeitungsvorrichtung 3 ausgebildet, wobei die Bearbeitungsvorrichtung 3 einen Warteabschnitt 22 und einen Umgreifabschnitt 23 für die Handhabungsvorrichtung 21 aufweist. Die Handhabungsvorrichtung 21 wird dabei vor einem Umgreifzeitpunkt aus dem Warteabschnitt 22 in den Umgreifabschnitt 23 und nach dem Umgreifzeitpunkt aus dem Umgreifabschnitt 23 in den Warteabschnitt 22 verbracht.

Bei einer Handhabungsvorrichtung 21 kann es sich dabei beispielsweise auch um eine Biegehilfe für eine Abkantpresse 7 handeln, mittels welcher Bauteile 4, 19 im Zuge eines Bearbeitungszyklus auch gestützt werden können.

Gemäß einer nicht näher dargestellten Ausführungsform kann der zumindest eine zweite Bearbeitungszyklus auch an einer zweiten Bearbeitungsvorrichtung 24 durchgeführt werden. Bei der ersten Bearbeitungsvorrichtung 3 kann es sich hierbei wiederum um eine Abkantpresse 7 und bei der zweiten Bearbeitungsvorrichtung 24 kann es sich um eine Schwenkbiegemaschine oder ebenfalls um eine Abkantpresse 7 handeln.

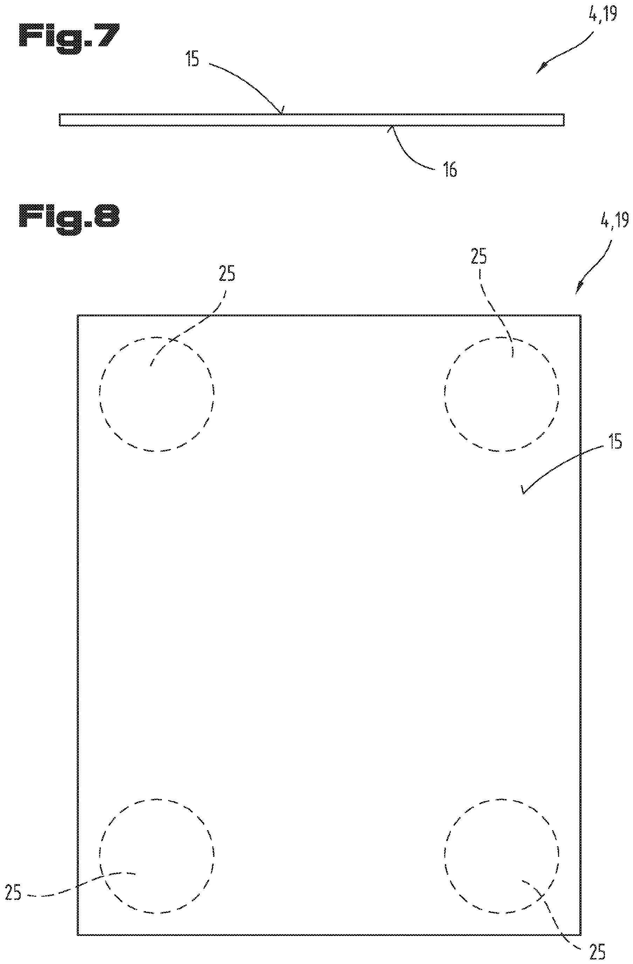

Fig. 7 zeigt ein Bauteil 4, 19 mit einer ersten Greiffläche 15 und einer zweiten Greiffläche 16 in einer Seitenansicht. Das Bauteil 4, 19 kann dabei von einem ersten Manipulator 5 an der ersten Greiffläche 15 und von einem zweiten Manipulator 6 an der zweiten Greiffläche 16 aufgegriffen, gehalten und transportiert werden.

In der Fig. 8 ist das Bauteil 4, 19 mit mehreren Teilabschnitten 25 der ersten erste Greiffläche 15 in einer Draufsicht dargestellt. In den Teilabschnitten 25 kann dabei das Bauteil 4, 19 mittels an dem ersten Manipulator 5 bzw. zweiten Manipulator 6 angeordneten Vakuumsaugern 8 aufgegriffen werden.

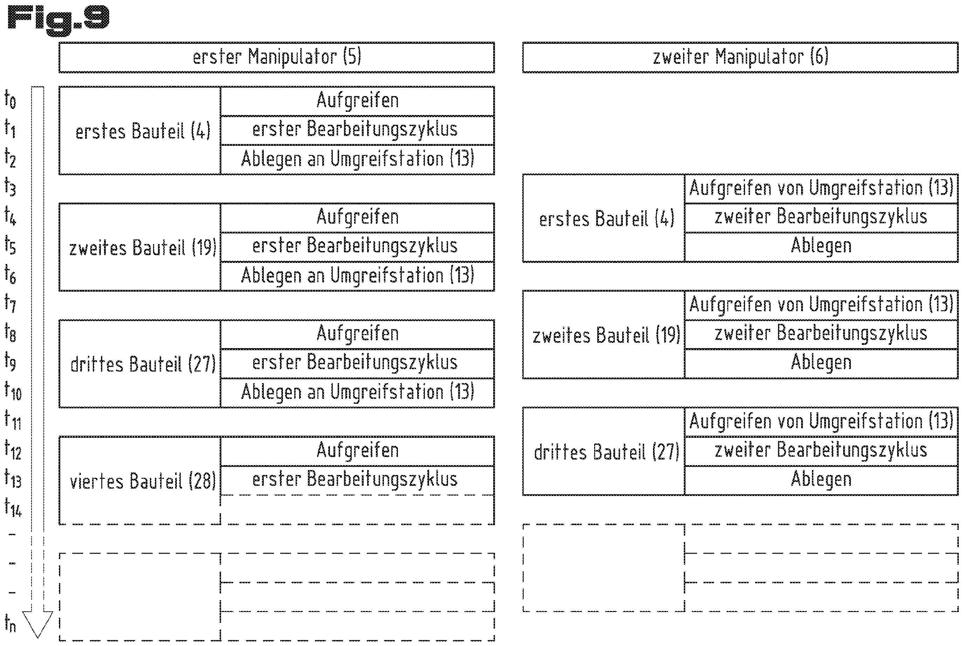

In der Fig. 9 ist ein Ablaufdiagramm mit mehreren Bearbeitungszyklen an mehreren Bauteilen 4, 19 dargestellt.

Zu einem Zeitpunkt t₀ wird das erste Bauteil 4 von einem ersten Manipulator 5 aufgegriffen. Daraufhin, zu einem Zeitpunkt t₁, wird ein erster Bearbeitungszyklus mit zumindest einem Bearbeitungsschritt an dem ersten Bauteil 4 an einer ersten Bearbeitungsvorrichtung 3 durchgeführt. Zu einem Zeitpunkt t₂ wird das erste Bauteil 4 an einem Auflageabschnitt 14 bzw. einer Umgreifstation 13 abgelegt. Zu einem Zeitpunkt t₃ wird das erste Bauteil 4 von einem zweiten Manipulator 6 von dem Auflageabschnitt 14 bzw. der Umgreifstation 13 aufgegriffen.

Zu einem Zeitpunkt t₄ wird ein zweites Bauteil 19 vom ersten Manipulator 5 beispielsweise von einem Stapel 26, wie einem Stapel 26 für Ausgangsmaterialien in Form von Blechplatten aufgegriffen. Gleichzeitig wird ein zweiter Bearbeitungszyklus mit zumindest einem Bearbeitungsschritt an dem ersten Bauteil 4 durchgeführt. Während zu einem Zeitpunkt t₅ das erste Bauteil 4 von dem zweiten Manipulator 6 beispielsweise auf einem Stapel 26 für End- bzw. Zwischenprodukte aus Blechplatten abgelegt wird, wird an dem zweiten Bauteil 19 ein erster Bearbeitungszyklus durchgeführt.

Zu einem Zeitpunkt t₆ wird in weiterer Folge das zweite Bauteil 19 an der Umgreifstation 13 abgelegt und von der Bearbeitungsvorrichtung 3 lastabtragend abgestützt. Zu einem Zeitpunkt t₇ wird das zweite Bauteil 19 von dem zweiten Manipulator 6 von der Umgreifstation 13 aufgegriffen und zu einem Zeitpunkt t₈ wird ein zweiter Bearbeitungszyklus an dem zweiten Bauteil 19 durchgeführt. Gleichzeitig wird von dem ersten Manipulator 5 ein drittes Bauteil 27 aufgegriffen. Während zu einem Zeitpunkt t₉ ein erster Bearbeitungszyklus an dem dritten Bauteil 27 durchgeführt wird, wird das zweite Bauteil 19 beispielsweise auf einem Stapel 26 für End- bzw. Zwischenprodukte abgelegt. Zu einem Zeitpunkt t₁₀ wird in weiterer Folge das dritte Bauteil 27 an der Umgreifstation 13 abgelegt. Zu einem Zeitpunkt t₁₁ wird als nächstes das dritte Bauteil 27 von der Umgreifstation 13 aufgegriffen. Während eines zweiten Bearbeitungszyklus an dem dritten Bauteil 27 zu einem Zeitpunkt t₁₂ wird ein viertes Bauteil 28, beispielsweise von einem Stapel 26 für Ausgangs- bzw. Rohmaterialien aufgegriffen und zu einem Zeitpunkt t₁₃ wird ein ersten Bearbeitungszyklus an dem vierten Bauteil 28 durchgeführt. Gleichzeitig wird von dem zweiten Manipulator 6 das dritte Bauteil 27 abgelegt.

Das Aufgreifen, Durchführen eines ersten Bearbeitungszyklus, Ablegen an einer Umgreifstation 13, Aufgreifen von der Umgreifstation 13, Durchführen eines zweiten Bearbeitungszyklus und Ablegen lässt sich beliebig oft bzw. lange an mehreren Bauteilen 4, 19, 27, 28 nacheinander durchführen, wobei das Aufgreifen und/oder Ablegen von Bauteilen 4, 19, 27, 28 hauptzeitparallel zu den einzelnen Bearbeitungszyklen bzw. Bearbeitungsschritten durchgeführt wird.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Fertigungsanlage
- 2: Manipulatoranordnung
- 3: erste Bearbeitungsvorrichtung
- 4: erstes Bauteil
- 5: erster Manipulator
- 6: zweiter Manipulator
- 7: Abkantpresse
- 8: Vakuumsauger
- 9: Bearbeitungsabschnitt
- 10: erste Verfahrstrecke
- 11: Längsrichtung
- 12: Schienenanordnung
- 13: Umgreifstation
- 14: Auflageabschnitt
- 15: erste Greiffläche
- 16: zweite Greiffläche
- 17: Werkzeug
- 18: Biegewerkzeug
- 19: zweites Bauteil
- 20: zweite Verfahrstrecke
- 21: Handhabungsvorrichtung
- 22: Warteabschnitt
- 23: Umgreifabschnitt
- 24: zweite Bearbeitungsvorrichtung
- 25: Teilabschnitt
- 26: Stapel
- 27: drittes Bauteil
- 28: viertes Bauteil

## Patentansprüche

1. Verfahren zum Transport und/oder Handling von Bauteilen (4), insbesondere Blechteilen, umfassend
eine Manipulatoranordnung (2) mit einem ersten Manipulator (5) und zumindest einem zweiten Manipulator (6), wobei der erste Manipulator (5) und der zumindest eine zweite Manipulator (6) dazu ausgebildet sind ein Bauteil (4) aufzugreifen, zu transportieren, zu halten und/oder abzulegen;
zumindest eine Bearbeitungsvorrichtung (3) zur Durchführung von Bearbeitungsschritten an dem Bauteil (4);
wobei nach einem ersten Bearbeitungszyklus zu einem vorbestimmten Umgreifzeitpunkt eine Übergabe des Bauteils (4) von dem ersten Manipulator (5) an den zumindest einen zweiten Manipulator (6) erfolgt,
wobei der Umgreifzeitpunkt zwischen dem ersten Bearbeitungszyklus und zumindest einem zweiten Bearbeitungszyklus liegt, und
wobei während dem Umgreifzeitpunkt das Bauteil (4) an der Bearbeitungsvorrichtung (3) zumindest abschnittsweise aufliegt und ausschließlich von der Bearbeitungsvorrichtung (3) lastabtragend abgestützt wird,
wobei das Bauteil (4) von dem ersten Manipulator (5) an einer Umgreifstation (13) abgelegt wird und dass das Bauteil (4) von dem zumindest einen zweiten Manipulator (6) von der Umgreifstation (13) aufgegriffen wird,
**dadurch gekennzeichnet, dass** die Umgreifstation (13) als Handhabungsvorrichtung (21) an der Bearbeitungsvorrichtung (3) ausgebildet ist, wobei die Bearbeitungsvorrichtung (3) einen Warteabschnitt (22) und einen Umgreifabschnitt (23) für die Handhabungsvorrichtung (21) umfasst und wobei die Handhabungsvorrichtung (21) vor dem Umgreifzeitpunkt aus dem Warteabschnitt (22) in den Umgreifabschnitt (23) und nach dem Umgreifzeitpunkt aus dem Umgreifabschnitt (23) in den Warteabschnitt (22) verbracht wird.

2. Verfahren nach Anspruch 1, **dadurch gekennzeichnet, dass** das Bauteil (4) eine erste Greiffläche (15) und eine zur ersten Greiffläche (15) verschiedene zweite Greiffläche (16) umfasst, wobei das Bauteil (4) von dem ersten Manipulator (5) an der ersten Greiffläche (15) und von dem zumindest einen zweiten Manipulator (6) an der zweiten Greiffläche (16) aufgegriffen wird.

3. Verfahren nach Anspruch 2, **dadurch gekennzeichnet, dass** das Bauteils (4) an der ersten Greiffläche (15), welche an der Oberseite des Bauteils (4) ausgebildet ist und an der zweiten Greiffläche (16), welche an der Unterseite des Bauteils (4) ausgebildet ist, aufgegriffen wird.

4. Verfahren nach einem der vorhergehenden Ansprüche, **dadurch gekennzeichnet, dass** während dem zumindest einen zweiten Bearbeitungszyklus ein zweites Bauteil (19) von dem ersten Manipulator (5) aufgegriffen wird.

5. Verfahren nach einem der vorhergehenden Ansprüche, **dadurch gekennzeichnet, dass** während dem ersten Bearbeitungszyklus an dem zweiten Bauteil (19), das erste Bauteil (4) von dem zumindest einen zweiten Manipulator (6) abgelegt wird.

6. Verfahren nach einem der vorhergehenden Ansprüche, **dadurch gekennzeichnet, dass** das Bauteil (4) auf zumindest einem Werkzeug (17) der Bearbeitungsvorrichtung (3) zumindest abschnittsweise aufliegt und lastabtragend abgestützt wird, während das Bauteil (4) von dem zumindest einen zweiten Manipulator (6) aufgegriffen wird.

7. Verfahren nach einem der vorhergehenden Ansprüche, **dadurch gekennzeichnet, dass** das Bauteil (4) durch ein Blechteil gebildet ist, die zumindest eine Bearbeitungsvorrichtung (3) durch eine Biegemaschine gebildet ist, und das zumindest eine Werkzeug (17) durch Oberwerkzeuge und Unterwerkzeuge der Biegemaschine gebildet ist, wobei das Blechteil während dem Aufgreifen durch den zumindest einen zweiten Manipulator (6) zwischen den Oberwerkzeugen und Unterwerkzeugen geklemmt wird und das Blechteil während dem Aufgreifen durch den zumindest einen zweiten Manipulator (6) vom ersten Manipulator (5) nicht kontaktiert oder nicht beaufschlagt wird.

8. Verfahren nach einem der vorhergehenden Ansprüche, **dadurch gekennzeichnet, dass** der vorbestimmte Umgreifzeitpunkt zwischen dem ersten Manipulator (5) und dem zumindest einen zweiten Manipulator (6) zwischen einem ersten Biegevorgang zur Herstellung einer ersten Umformung im Bauteil (4) und einem zweiten Biegevorgang zur Herstellung einer zweiten Umformung im Bauteil (4) liegt, welche zweite Umformung gegengleich zur ersten Umformung verläuft, insbesondere bevor ein im Wesentlichen Z-förmiger Querschnittsverlauf im Bauteil (4) geformt wird.

9. Verfahren nach einem der vorhergehenden Ansprüche, **dadurch gekennzeichnet, dass** der erste Manipulator (5) und der zumindest eine zweite Manipulator (6) entlang einer gemeinsamen Verfahrstrecke (10) in Längsrichtung (11) verfahren werden.

10. Verfahren nach einem der Ansprüche 1 bis 9, **dadurch gekennzeichnet, dass** der erste Manipulator (5) entlang einer ersten Verfahrstrecke (10) in Längsrichtung (11) verfahren wird und dass der zumindest eine zweite Manipulator (6) entlang einer zweiten Verfahrstrecke (20), welche zweite Verfahrstrecke (20) parallel zur ersten Verfahrstrecke (10) verläuft, in Längsrichtung (11) verfahren wird.

11. Verfahren nach einem der vorhergehenden Ansprüche, **dadurch gekennzeichnet, dass** der zumindest eine zweite Bearbeitungszyklus an einer zweiten Bearbeitungsvorrichtung (24) durchgeführt wird.

12. Fertigungsanlage (1), insbesondere zur Durchführung eines Verfahrens nach einem der Ansprüche 1 bis 11 umfassend
eine Manipulatoranordnung (2) mit einem ersten Manipulator (5) und zumindest einem zweiten Manipulator (6);
zumindest eine Bearbeitungsvorrichtung (3) zur Durchführung von Bearbeitungsschritten an einem Bauteil (4),
wobei an der Bearbeitungsvorrichtung (3) ein Auflageabschnitt (14) vorgesehen ist, in welchem das Bauteil (4) während einem Umgreifzeitpunkt lastabtragend abstützbar ist,
wobei in dem Auflageabschnitt (14) eine Umgreifstation (13) ausgebildet ist, von welcher das Bauteil (4) während einem Umgreifzeitpunkt lastabtragend abstützbar ist,
**dadurch gekennzeichnet, dass** die Umgreifstation (13) als Handhabungsvorrichtung (21) an der Bearbeitungsvorrichtung (3) ausgebildet ist, wobei die Bearbeitungsvorrichtung (3) einen Warteabschnitt (22) und eine Umgreifabschnitt (23) für die Handhabungsvorrichtung (21) umfasst und wobei die Handhabungsvorrichtung (21) aus dem Warteabschnitt (22) in den Umgreifabschnitt (23) und vice versa verfahrbar ist.

13. Fertigungsanlage (1) nach Anspruch 12, **dadurch gekennzeichnet, dass** eine gemeinsame Verfahrstrecke (10) für den ersten Manipulator (5) und für den zumindest einen zweiten Manipulator (6) vorgesehen ist.

14. Fertigungsanlage (1) nach einem der Ansprüche 12 oder 13, **dadurch gekennzeichnet, dass** eine erste Verfahrstrecke (10) für den ersten Manipulator (5) und eine zweite Verfahrstrecke (20) für den zumindest einen zweiten Manipulator (6) vorgesehen ist.

15. Fertigungsanlage (1) nach einem der Ansprüche 12 bis 14, **dadurch gekennzeichnet, dass** eine zweite Bearbeitungsvorrichtung (24) vorgesehen ist, an welcher zumindest ein zweiter Bearbeitungszyklus durchführbar ist.

## Claims

1. A method for transporting and/or handling components (4), in particular sheet metal parts, comprising
a manipulator arrangement (2) with a first manipulator (5) and at least one second manipulator (6), wherein the first manipulator (5) and the at least one second manipulator (6) are designed to grip, to transport, to hold and/or to deposit a component (4),
at least one processing device (3) for performing processing steps on the component (4), wherein, after a first processing cycle, a transfer of the component (4) from the first manipulator (5) to the at least one second manipulator (6) takes place at a predefined point in time of re-gripping,
wherein the point in time of re-gripping takes place between the first processing cycle and at least one second processing cycle, and
wherein, during the point in time of re-gripping, the component (4) at least in some sections rests on the processing device (3) and is supported in a load-dissipating manner solely by the processing device (3),
wherein the component (4) is deposited by the first manipulator (5) at a re-gripping station (13), and that the component (4) is gripped from the re-gripping station (13) by the at least one second manipulator (6),
**characterized in that** the re-gripping station (13) is formed as a handling device (21) at the processing device (3), wherein the processing device (3) comprises a waiting section (22) and a re-gripping section (23) for the handling device (21), and wherein the handling device (21) is moved out of the waiting section (22) into the re-gripping section (23) before the point in time of re-gripping and moved out of the re-gripping section (23) into the waiting section (22) after the point in time of re-gripping.

2. The method according to claim 1, **characterized in that** the component (4) comprises a first gripping surface (15) and a second gripping surface (16) different from the first gripping surface (15), wherein the component (4) is gripped by the first manipulator (5) on the first gripping surface (15) and by the at least one second manipulator (6) on the second gripping surface (16).

3. The method according to claim 2, **characterized in that** the component (4) is gripped on the first gripping surface (15), which is formed on the upper side of the component (4), and on the second gripping surface (16), which is formed on the bottom side of the component (4).

4. The method according to one of the preceding claims, **characterized in that** during the at least one second processing cycle, a second component (19) is gripped by the first manipulator (5).

5. The method according to one of the preceding claims, **characterized in that** during the first processing cycle on the second component (19), the first component (4) is deposited by the at least one second manipulator (6).

6. The method according to one of the preceding claims, **characterized in that** the component (4) at least in some sections rests on and is supported in a load-dissipating manner on at least one tool (17) of the processing device (3) while the component (4) is gripped by the at least one second manipulator (6).

7. The method according to one of the preceding claims, **characterized in that** the component (4) is formed by a sheet metal part, the at least one processing device (3) is formed by a bending machine, and the at least one tool (17) is formed by upper tools and lower tools of the bending machine, wherein the sheet metal part, during the gripping by the at least one second manipulator (6), is clamped between the upper tools and lower tools, and the sheet metal part, during the gripping by the at least one second manipulator (6), is not contacted or not impinged by the first manipulator (5).

8. The method according to one of the preceding claims, **characterized in that** the predetermined point in time of re-gripping between the first manipulator (5) and the at least one second manipulator (6) takes place between a first bending operation for producing a first deformation in the component (4) and a second bending operation for producing a second deformation in the component (4), which second deformation extends in a mirror-inverted manner to the first deformation, in particular before an essentially Z-shaped cross-sectional extension is formed in the component (4).

9. The method according to one of the preceding claims, **characterized in that** the first manipulator (5) and the at least one second manipulator (6) are displaced along a common travel path (10) in the longitudinal direction (11).

10. The method according to one of claims 1 to 9, **characterized in that** the first manipulator (5) is displaced along a first travel path (10) in the longitudinal direction (11), and that the at least one second manipulator (6) is displaced along a second travel path (20), which second travel path (20) extends in parallel with the first travel path (10), in the longitudinal direction (11).

11. The method according to one of the preceding claims, **characterized in that** the at least one second processing cycle is carried out on a second processing device (24).

12. A production plant (1), in particular for carrying out a method according to one of claims 1 to 11, comprising
a manipulator arrangement (2) having a first manipulator (5) and at least one second manipulator (6);
at least one processing device (3) for carrying out processing steps on a component (4), wherein a support section (14) is provided on the processing device (3), in which support section (14) the component (4) can be supported in a load-dissipating manner during a point in time of re-gripping,
wherein a re-gripping station (13) is formed in the support section (14), by which re-gripping station (13) the component (4) can be supported in a load-dissipating manner during the point in time of re-gripping,
**characterized in that** the re-gripping station (13) is formed as a handling device (21) at the processing device (3), wherein the processing device (3) comprises a waiting section (22) and a re-gripping section (23) for the handling device (21), and wherein the handling device (21) can be moved out of the waiting section (22) into the re-gripping section (23) and vice versa.

13. The production plant (1) according claim 12, **characterized in that** a common travel path (10) for the first manipulator (5) and for the at least one second manipulator (6) is provided.

14. The production plant (1) according to one of claims 12 or 13, **characterized in that** a first travel path (10) for the first manipulator (5) and a second travel path (20) for the at least one second manipulator (6) is provided.

15. The production plant (1) according to one of claims 12 to 14, **characterized in that** a second processing device (24) is provided, on which at least a second processing cycle can be carried out.

## Revendications

1. Procédé de transport et/ou de manipulation de pièces (4), plus particulièrement de pièces en tôle, comprenant
un dispositif de manipulation (2) avec un premier manipulateur (5) et au moins un deuxième manipulateur (6), dans lequel le premier manipulateur (5) et l'au moins un deuxième manipulateur (6) sont conçus pour saisir, transporter, maintenir et/ou déposer une pièce (4) ;
au moins un dispositif de traitement (3) pour l'exécution d'étapes de traitement sur la pièce (4) ;
dans lequel, après le premier cycle de traitement, à un moment d'enveloppement prédéterminé, a lieu un transfert de la pièce (4) du premier manipulateur (5) à l'au moins un deuxième manipulateur (6),
dans lequel le moment d'enveloppement se trouve entre le premier cycle de traitement et au moins un deuxième cycle de traitement et
dans lequel, pendant le moment d'enveloppement, la pièce (4) repose, au moins à certains endroits, sur le dispositif de traitement (3) et est soutenue, avec support de charge, exclusivement par le dispositif de traitement (3),
dans lequel la pièce (4) est déposée, par le premier manipulateur (5), au niveau d'une station d'enveloppement (13) et la pièce (4) est saisie hors de la station d'enveloppement (13) par l'au moins un deuxième manipulateur (6),
**caractérisé en ce que** la station d'enveloppement (13) est conçue comme un dispositif de manipulation (21) sur le dispositif de traitement (3), dans lequel le dispositif de traitement (3) comprend une portion d'attente (22) et une portion d'enveloppement (23) pour le dispositif de manipulation (21) et dans lequel le dispositif de manipulation (21) est déplacé, avant le moment d'enveloppement, de la portion d'attente (22) vers la portion d'enveloppement (23) et, après le moment d'enveloppement, de la portion d'enveloppement (23) vers la portion d'attente (22).

2. Procédé selon la revendication 1, **caractérisé en ce que** la pièce (4) comprend une surface de préhension (15) et une deuxième surface de préhension (16), différente de la première surface de préhension (15), dans lequel la pièce (4) est saisie, par le premier manipulateur (5), au niveau de la première surface de préhension (15) et, par l'au moins un deuxième manipulateur (6), au niveau de la deuxième surface de préhension (16).

3. Procédé selon la revendication 2, **caractérisé en ce que** la pièce (4) est saisie au niveau de la première surface de préhension (15) qui est réalisée sur la face supérieure de la pièce (4) et au niveau de la deuxième surface de préhension (16) qui est réalisée sur la face inférieure de la pièce (4).

4. Procédé selon l'une des revendications précédentes, **caractérisé en ce que**, pendant l'au moins un deuxième cycle de traitement, une deuxième pièce (19) est saisie par le premier manipulateur (5).

5. Procédé selon l'une des revendications précédentes, **caractérisé en ce que**, pendant le premier cycle de traitement sur la deuxième pièce (19), la première pièce (4) est déposée par l'au moins un deuxième manipulateur (6).

6. Procédé selon l'une des revendications précédentes, **caractérisé en ce que** la pièce (4) repose, au moins à certains endroits, sur au moins un outil (17) du dispositif de traitement (3) et est soutenue avec support de charge, pendant que la pièce (4)est saisie par l'au moins un deuxième manipulateur (6).

7. Procédé selon l'une des revendications précédentes, **caractérisé en ce que** la pièce (4) est constituée d'une pièce en tôle, l'au moins un dispositif de traitement (3) est constitué d'une machine de cintrage et l'au moins un outil (17) est constitué d'outils supérieurs et d'outils inférieurs de la machine de cintrage, dans lequel la pièce en tôle est serrée, pendant la préhension par l'au moins un deuxième manipulateur (6), entre les outils supérieurs et les outils inférieurs et la pièce en tôle n'entre pas en contact ou n'est pas sollicitée par le premier manipulateur (5) pendant la préhension par l'au moins un deuxième manipulateur (6).

8. Procédé selon l'une des revendications précédentes, **caractérisé en ce que** le moment d'enveloppement prédéterminé entre le premier manipulateur (5) et l'au moins un deuxième manipulateur (6) se trouve entre un premier processus de cintrage pour la réalisation d'une première déformation dans la pièce (4) et un deuxième processus de cintrage pour la réalisation d'une deuxième déformation dans la pièce (4), cette deuxième déformation s'étendant de manière inversée par rapport à la première déformation, plus particulièrement avant un contour à section transversale globalement en forme de Z dans la pièce (4).

9. Procédé selon l'une des revendications précédentes, **caractérisé en ce que** le premier manipulateur (5) et l'au moins un deuxième manipulateur (6) sont déplacés le long d'une trajectoire (10) dans la direction longitudinale (11).

10. Procédé selon l'une des revendications 1 à 9, **caractérisé en ce que** le premier manipulateur (5) est déplacé le long d'une première trajectoire (10) dans la direction longitudinale (11) et **en ce que** l'au moins un deuxième manipulateur (6) est déplacé le long d'une deuxième trajectoire (20), cette deuxième trajectoire (20) étant parallèle à la première trajectoire (10), dans la direction longitudinale (11).

11. Procédé selon l'une des revendications précédentes, **caractérisé en ce que** l'au moins un deuxième cycle de traitement est exécuté au niveau d'un deuxième dispositif de traitement (24).

12. Installation de fabrication (1), plus particulièrement pour l'exécution d'un procédé selon l'une des revendications 1 à 11, comprenant :
un dispositif de manipulation (2) avec un premier manipulateur (5) et au moins un deuxième manipulateur (6) ;
au moins un dispositif de traitement (3) pour l'exécution d'étapes de traitement sur une pièce (4),
dans lequel, sur le dispositif de traitement (3), est prévue une portion d'appui (14) dans laquelle la pièce (4) peut être soutenue, avec support de charge, pendant un moment d'enveloppement,
dans lequel, dans la portion d'appui (14), est réalisée une station d'enveloppement (13), grâce à laquelle la pièce (4) peut être soutenue, avec support de charge, pendant un moment d'enveloppement,
**caractérisé en ce que** la station d'enveloppement (13) est conçue comme un dispositif de manipulation (21) sur le dispositif de traitement (3), dans lequel le dispositif de traitement (3) comprend une portion d'attente (22) et une portion d'enveloppement (23) pour le dispositif de manipulation (21) et dans lequel le dispositif de manipulation (21) peut être déplacé de la portion d'attente (22) vers la portion d'enveloppement (23) et vice-versa.

13. Installation de fabrication (1) selon la revendication 12, **caractérisé en ce qu'**une trajectoire (10) commune est prévue pour le premier manipulateur (5) et pour l'au moins un deuxième manipulateur (6).

14. Installation de fabrication (1) selon l'une des revendications 12 ou 13, **caractérisé en ce qu'**une première trajectoire (10) est prévue pour le premier manipulateur (5) et une deuxième trajectoire (20) est prévue pour l'au moins un deuxième manipulateur (6).

15. Installation de fabrication (1) selon l'une des revendications 12 à 14, **caractérisé en ce qu'**un deuxième dispositif de traitement (24) est prévu, au niveau duquel au moins un deuxième cycle de traitement peut être exécuté.
